Europäisches Patentamt

European Patent Office

Office européen des brevets

(19)

(11) Veröffentlichungsnummer: **0 009 681**
**B1**

(12) **EUROPÄISCHE PATENTSCHRIFT**

(45) Veröffentlichungstag der Patentschrift:
17.08.83

(21) Anmeldenummer: **79103415.0**

(22) Anmeldetag: **12.09.79**

(51) Int. Cl.³: **H 02 K 7/14**, H 02 K 1/18,
A 01 K 63/04, F 04 D 13/02,
H 02 K 5/12, H 02 K 49/10

(54) Elektrischer Antriebsmotor, insbesondere für Wasserpumpen auf dem Aquariensektor.

(30) Priorität: **06.10.78 DE 7829842 U**

(43) Veröffentlichungstag der Anmeldung:
**16.04.80 Patentblatt 80/8**

(45) Bekanntmachung des Hinweises auf die Patenterteilung:
**17.08.83 Patentblatt 83/33**

(84) Benannte Vertragsstaaten:
**AT BE CH DE FR GB IT LU NL SE**

(56) Entgegenhaltungen:
**DE-A-2 049 569**
**DE-B-1 252 788**
**DE-B-1 952 352**
**DE-B-1 952 353**
**DE-C-945 183**
**DE-U-7 829 842**
**GB-A-1 120 162**
**US-A-2 619 331**
**US-A-3 198 125**
**US-A-3 485 177**

(73) Patentinhaber: **NUOVA-Aquaristik Helmut Hofmann GmbH & Co. KG, D-5063 Overath-Eulenthal (DE)**

(72) Erfinder: **Hofmann, Kurt Helmut, verstorben, D-5063 Overath-Eulenthal (DE)**

(74) Vertreter: **Dahlke, Werner, Dipl.-Ing., Frankenforster Strasse 137, D-5060 Bergisch Gladbach 3 (DE)**

Elektrischer Antriebsmotor, insbesondere für Wasserpumpen auf dem Aquariensektor

Die Erfindung betrifft einen elektrischen Antriebsmotor für den Aquariensektor, insbesondere zum Antrieb von Wasserpumpen, mit einer auf der Motorwelle sitzenden permanentmagnetischen Kupplung, einem den Motor umschließenden Gehäuse, das auf der dem anzutreibenden Aggregat zugewandten Seite eine dünnwandige geschlossene Membran aufweist, durch die die magnetische Kupplungskraft hindurchwirkt, sowie einer im Bereich der Membran vorgesehenen Befestigungseinrichtung zur Verbindung des Motorgehäuses mit dem Gehäuse des anzutreibenden Aggregats, wobei der Motor einschließlich Blechpaket, Spule und Rotor an zwei parallel zur Rotorachse liegenden äußeren Stiften sitzt, die auf der Seite der Membran in zylindrische Ausnehmungen im Motorgehäuse gesteckt sind.

Bei einem bekannten elektrischen Antriebsmotor der genannten Art (DE-B-1 952 353) ergeben sich zwar bereits weitgehend vereinfachte Montageverhältnisse, jedoch sind diese noch verbesserungsbedürftig.

Der Erfindung liegt die Aufgabe zugrunde, den elektrischen Antriebsmotor der eingangs genannten Art in der Weise zu verbessern, daß er schneller und problemloser montierbar ist, einen einfacheren Aufbau aufweist und sich besonders einfach mit den anzutreibenden Aggregaten verbinden läßt.

Erfindungsgemäß wird diese Aufgabe dadurch gelöst, daß die Stifte auf der der Membran gegenüberliegenden Seite mit elastischen Endkappen versehen sind, die sich an der Innenfläche des aufgesetzten Gehäusedeckels abstützen, daß die Stifte aus zwei zusammenschraubbaren Abschnitten bestehen, wobei der eine Abschnitt einen mittigen Gewindezapfen und der andere Abschnitt eine mittige Gewindebohrung aufweist, daß der Gewindezapfen durch das Blechpaket und durch zwei an beiden Enden des Blechpaketes angeordnete gekröpfte Lagerbügel hindurchgreift, die die Rotorteile lagern, daß allein die zusammengeschraubten Stiftabschnitte das Blechpaket und die Lagerbügel mit ihren einander gegenüberliegenden Stirnflächen zusammendrücken und haltern, daß als Befestigungseinrichtung zwischen dem Motorgehäuse und dem Gehäuse des anzutreibenden Aggregats eine Bajonettverbindung vorgesehen ist, und daß am Motorgehäuse der Bajonettinnenteil einstückig mit diesem rund um die dünnwandige Membran ausgebildet ist.

Die Montage eines solchen Motors in dem Gehäuse ist äußerst einfach, denn es brauchen lediglich die Stifte in die in dem Motorgehäuse ausgebildeten zylindrischen Ausnehmungen gesteckt und dann der Deckel aufgesetzt zu werden, ohne daß der Deckel in Umfangsrichtung eine bestimmte Stellung einnehmen muß. Der Aufwand, den die Stifte an dem Motor darstellen, wird bei dem Anmeldungsgegenstand dadurch kompensiert, daß die Stifte gleichzeitig zum Zusammenhalten des Motors dienen und der Motor aufgrund dieser Konstruktion aus einfachen Teilen hergestellt werden kann. Das Zusammenschließen des Motors mit den anzutreibenden Aggregaten ist aufgrund der Bajonettverbindung, die das einzige Befestigungselement darstellt, äußerst einfach. Das anzutreibende Aggregat, welches mit dem Motor verbunden werden soll, braucht mit Ausnahme des entsprechenden Bajonetteiles nicht auf irgendwelche Maße des Motors abgestimmt zu sein.

Das Motorgehäuse ist vorzugsweise becherförmig ausgebildet und auf der der Membran gegenüberliegenden Seite mit einem Deckel mit umlaufendem Dichtungsring verschlossen.

Zweckmäßig ist das Motorgehäuse als Kunststoffspritzteil ausgebildet. Die elektrische Zuleitung kann dabei ein mit einem Isoliermaterial umgebenes Kabel sein, das durch die Deckelwand hindurchlaufend dicht in diese eingegossen ist.

Das Motorgehäuse ist vorzugsweise mit einer Dauer-Ölfüllung versehen, so daß für eine ständige Schmierung gesorgt ist. Zur Umwälzung des Öls im Gehäuse kann an mindestens einer Stirnseite des Innenraums des Gehäuses ein sich rundum erstreckender, axial vorspringender Flansch mit Ausnehmungen angeordnet sein, wobei zwischen dem Flansch und der Innenwand des Motorgehäuses radiale Stege mit schrägen Auflaufflächen vorgesehen sind.

Um mit einfachen Mitteln eine gute Kühlung des Motors zu erreichen, kann das Motorgehäuse rund um seinen Umfang mit einstückig angeformten, in Axialrichtung verlaufenden, radial gerichteten Kühlrippen versehen sein

Diese können gleichzeitig zur Halterung bzw. Befestigung des Motors ausgenutzt werden. Zur Halterung bzw. Befestigung kann eine Konsole mit einer zweiarmigen Spannzange vorgesehen sein, deren Arme zwischen die Kühlrippen des Motorgehäuses eingreifen.

Die Erfindung ist in der Zeichnung beispielsweise veranschaulicht und im nachstehenden im einzelnen anhand der Zeichnung beschrieben. Es zeigt

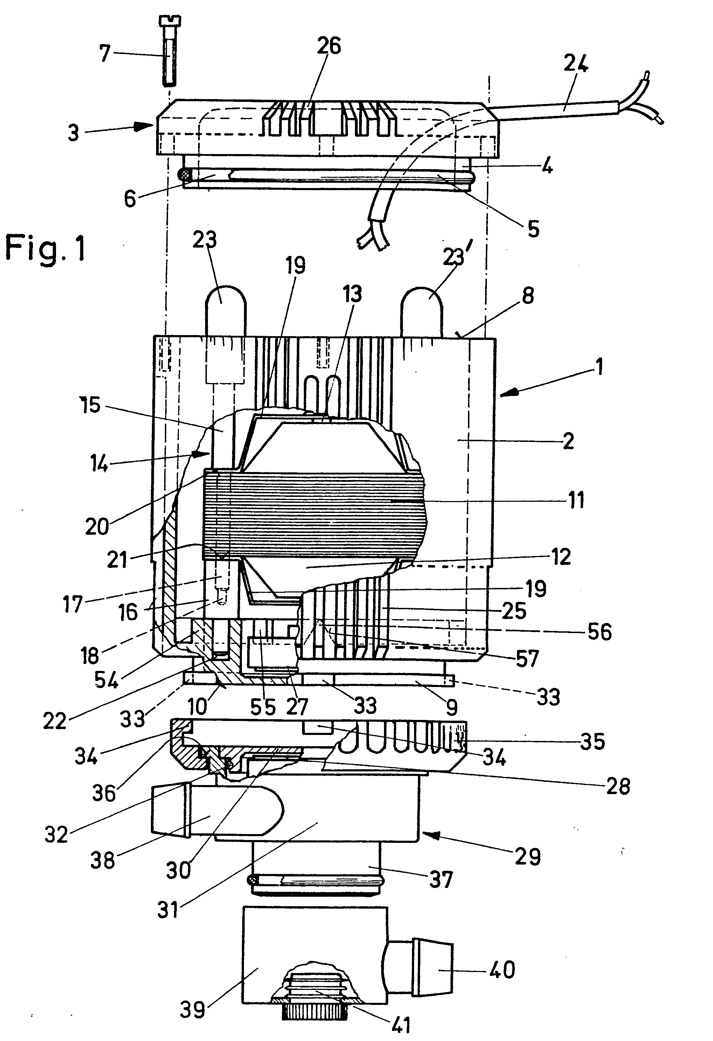

Fig. 1 in auseinandergezogenem Zustand einen Motor mit einer anzusetzenden Kreiselpumpe,

Fig. 2 das membranseitige Endteil des Motors aus Fig. 1 im Zusammenhang mit einem anderen Ausführungsbeispiel einer Pumpe und

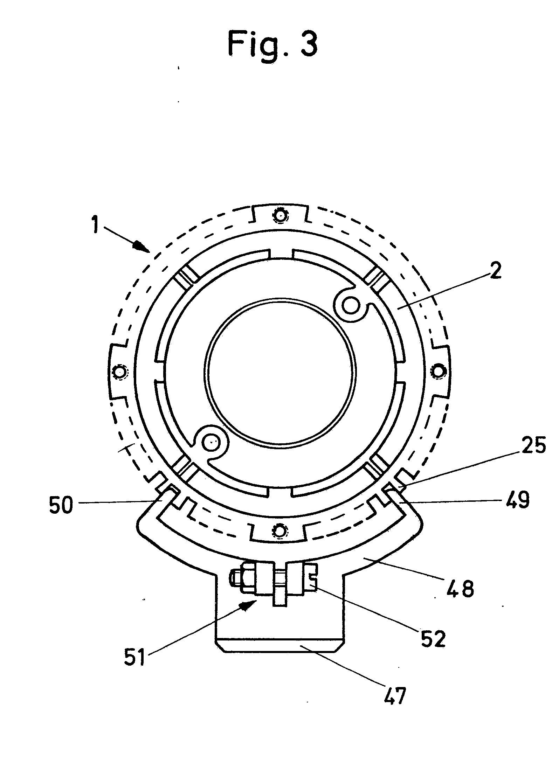

Fig. 3 eine Stirnansicht des Motors gemäß Fig. 1 auf einer Haltekonsole.

Nach der Zeichnung weist der elektrische Antriebsmotor 1 ein becherförmiges Gehäuse 2 auf, welches ein Kunststoff-Spritzteil ist. Das becherartige Gehäuse 2 ist mit einem ebenfalls als Kunststoffspritzteil ausgebildeten Deckel 3 verschließbar. Der Deckel 3, der den gleichen Außendurchmesser aufweist wie das Gehäuse 2, greift mit einem zylindrischen Führungsteil 4 formschlüssig in den zylindrischen Innenraum des Gehäuses 2 ein. Als flüssigkeits- und gasdichter Verschluß dient ein O-Ring 5, der in eine in dem zylindrischen Führungsteil 4 ausgebildete umlaufende Nut 6 eingelegt ist. Der Deckel 3 kann mit Hilfe von Schrauben 7 an der offenen Stirnseite 8 des Gehäuses 2 befestigt werden.

Auf der mit dem Deckel 3 verschließbaren offenen Stirnseite 8 gegenüberliegenden Seite ist das Gehäuse 2 mit einer einstückig angeformten dünnwandigen Membran 9 verschlossen, die eine ebene Außenfläche 10 aufweist.

Im Inneren des Gehäuses sind die die einzelnen Motorteile, wie das Blechpaket 11, die Spule 12 sowie der Rotor mit seiner Welle 13 mit Hilfe von zwei Stiften 14 gehaltert, die auf gegenüberliegenden Seiten der Motorwelle außerhalb der rotierenden Motorteile parallel zueinander liegen. Die Stifte 14 bestehen aus zwei zusammenschraubbaren Abschnitten 15 und 16, wobei der eine Abschnitt 15 einen mittigen Gewindezapfen 17 und der andere Abschnitt 16 eine mittige Gewindebohrung 18 aufweist. Die beiden Gewindezapfen 17 erstrekken sich durch das Blechpaket 11 sowie zwei an beiden Enden des Blechpaketes angeordnete gekröpfte Bügel 19 hindurch, wobei die beiden einander gegenüberliegenden Stirnflächen 20 und 21 der Stiftabschnitte 15 und 16 das Blechpaket 11 sowie die Bügel 19 fest zusammendrücken und haltern. Die Stifte 14 sitzen auf der mit der Membran 9 versehenen Seite des Motorgehäuses in zylindrischen Ausnehmungen 22 und tragen auf der gegenüberliegenden Seite elastische Endkappen 23, die sich an der Innenfläche des aufgesetzten Gehäusedeckels 3 abstützen.

Die rotierenden Motorteile sind in den von den Stiften 14 zusammen mit dem Blechpaket 11 getragenen gekröpften Bügeln 19 gelagert.

Als Stromzuführung dient ein mit einem Isoliermantel umgebenes Kabel 24, das durch die Deckelwand hindurchlaufend dicht in diese eingegossen ist. Bei fest aufgesetztem Deckel ist also das Motorgehäuse 2 fest verschlossen, ohne daß im Bereich der Stromzuführung eine Undichtigkeit entstehen kann. Das Motorgehäuse kann also problemlos auch unter Wasser eingesetzt werden.

Zur Kühlung des Motors ist das Motorgehäuse 2 rund um seinen Umfang mit einstückig angeformten, in Axialrichtung verlaufenden, radial vorspringenden Kühlrippen 25 versehen. Desgleichen weist auch der Deckel 3 entsprechende Kühlrippen 26 an seiner Stirnseite auf.

Unmittelbar hinter der einstückig mit dem Motorgehäuse 2 ausgebildeten Membran 9 sitzt der motorseitige Teil 27 einer permanentmagnetischen Kupplung. Der Kupplungsteil 27 dient zur Mitnahme eines entsprechenden Kupplungsteils 28 einer Kreiselpumpe 29. Der pumpenseitige Kupplungsteil 28 liegt dabei unmittelbar hinter einer ebenfalls ebenflächigen Membran 30, die auf der dem Motor 1 zugewandten Seite den dichten Abschluß des Pumpengehäuses 31 bildet. Die Membran 30 weist die Form eines Deckels auf, der unter Zwischenschaltung eines Dichtrings 32 dichtend auf das Pumpengehäuse 31 aufgesetzt ist.

Im Betrieb liegt die Membran 30 des Pumpengehäuses 31 bündig an der Membran 9 des Motorgehäuses 2 an, so daß die magnetischen Kupplungskräfte durch die beiden Membranen 9 und 30 hindurch übertragen werden können und somit der Motor 1 die Pumpe 29 antreiben kann.

Zur Verbindung des Motorgehäuses 2 mit dem Pumpengehäuse 31 dient eine Bajonettverbindung. Der Innenteil der Bajonettverbindung mit seinen nach außen gerichteten Nasen 33 ist einstückig mit dem Motorgehäuse 2 rund um die Membran 9 angeordnet. Der Bajonettaußenteil mit den nach innen gerichteten Haltenasen 34 sitzt an einem gesonderten Überwurfring 35, der über das Pumpengehäuse 31 gestülpt ist und dieses mit einem umlaufenden Anlagerand 36 festhält und gegen die Membran 9 des Motorgehäuses 2 drückt.

Das umzuwälzende Wasser wird bei Betätigung des Motors durch den Ansaugstutzen 37 in das Pumpengehäuse 31 hineingesaugt und durch einen tangential an das Pumpengehäuse angesetzten Stutzen 38 hinausgedrückt.

Damit der Motor 1 sowohl in vertikaler als auch in horizontaler Lage mit der angesetzten Pumpe eingesetzt werden kann, ist ein auf den Ansaugstutzen 37 der Pumpe 29 aufsetzbares Anschlußstück 39 vorgesehen, in welches das umzuwälzende Wasser entweder in radialer oder axialer Richtung eintreten kann.

Zum radialen Eintritt des angesaugten Wassers ist ein seitlicher, wahlweiser verschließbarer Stutzen 40 vorgesehen. Zum axialen Eintritt des Wassers ist eine axiale Durchgangsbohrung vorgesehen, die in dem in der Zeichnung dargestellten Ausführungsbeispiel mit einem Stopfen 41 verschlossen ist. Wenn das Wasser in das Anschlußstück 39 in axialer Richtung eintreten soll, wird anstelle des Stopfens 41 ein Anschlußstück eingesetzt und der Anschluß 40 verschlossen.

Der Motor 1 kann aufgrund der Tatsache, daß sein Gehäuse 2 allseitig hermetisch abgeschlossen ist, mit einer Ölfüllung versehen sein. Die Ölmenge wird zweckmäßig so gewählt, daß im Ruhezustand des Motors alle Lagerstellen mit Öl bedeckt sind. Um während des Betriebs des Motors eine gute Durchspülung zu erzielen, ist an der kupplungsseitigen Stirnseite des Innenraums des Motorgehäuses ein sich rundum erstreckender, axial vorspringender Flansch 54 vorgesehen, der in Abständen Ausnehmungen 55 aufweist. Zwischen dem Flansch 54 und der Innenwand des Motorgehäuses sind radiale Stege 56 vorgesehen, die einen dachförmigen Querschnitt mit schrägen Auflaufflächen 57 aufweisen. Im Betrieb des Motors, bei vertikaler und auch bei in der Zeichnung nicht dargestellter horizontaler Lage, wird das Öl von dem rotierenden Kupplungsteil 27 nach außen geschleudert, tritt durch die in dem Flansch 54 vorgesehenen Ausnehmungen 55 und wird beim Auftreffen auf die schrägen Auflaufflächen 57 über den gesamten Innenraum des Motorgehäuses 2 verteilt.

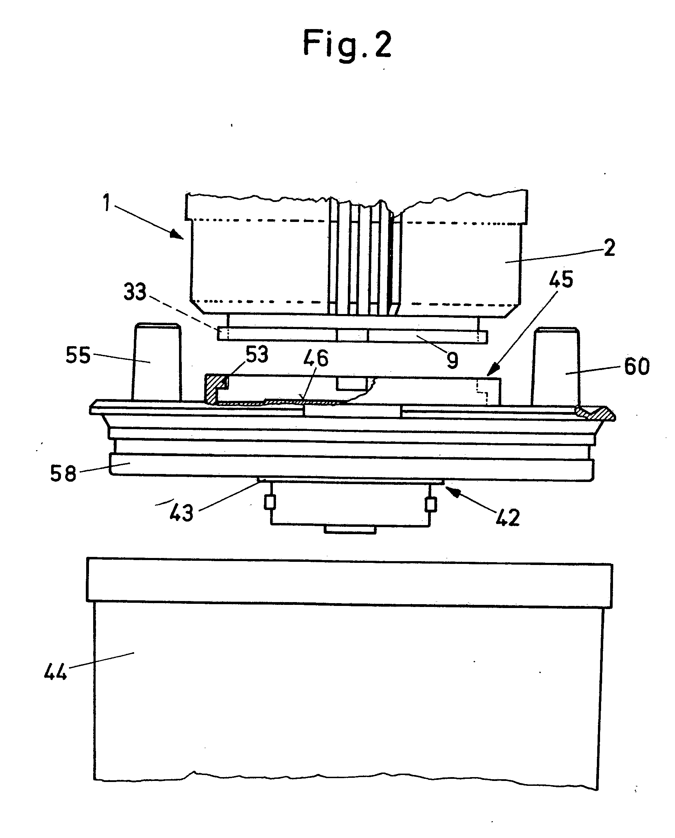

Bei dem in Fig. 2 dargestellten Ausführungsbeispiel wirkt der Motor 2 mit einer Kreiselpumpe 42 zusammen, deren Gehäuse 43 an einem Deckel 58 für ein aufrechtstehendes Filtergefäß 44 befestigt ist. Dieser weist einen unmittelbar in das Gefäß 44 mündenden Wassereinlaß und einen mit dem Pumpengehäuse 42 verbundenen Wasserauslaß 60 auf. Im Betrieb wird unten an das Pumpengehäuse ein in der Zeichnung nicht dargestellter Filter angeschlossen.

Bei diesem Ausführungsbeispiel ist der pumpenseitige Teil 45 der zwischen Motorgehäuse 2 und Pumpengehäuse 42 vorgesehenen Bajonettverbindung unmittelbar an den Deckel 58 angeformt. Wenn das Motorgehäuse 2 mit seiner Membran 9 gegen die Membranfläche 46 des Pumpengehäuses 43 angelegt wird, greifen die Teile der Bajonettverbindung ineinander und nach einer kurzen Drehung werden die vorspringenden Nasen 33 des motorseitigen Teils der Bajonettverbindung von den nach innen gerichteten Haltenasen 53 des pumpenseitigen Teils der Bajonettverbindung festgehalten.

Um den Motor 1 auch unabhängig von anderen Aggregaten selbständig haltern zu können, ist eine Konsole 47 mit einer zweiarmigen Spannzange 48 vorgesehen, deren Arme 49 und 50 zwischen die Kühlrippen 25 des Motorgehäuses 2 eingreifen. Durch Betätigung eines Spannmechanismus 51 werden die Arme 49 und 50 etwas aufeinander zu bewegt, so daß sie fest zwischen den Kühlrippen 25 sitzen. Als Spannmechanismus dient eine Schraube 52. ·

## Patentansprüche

1. Elektrischer Antriebsmotor für den Aquariensektor, insbesondere zum Antrieb von Wasserpumpen, mit einer auf der Motorwelle (13) sitzenden permanent-magnetischen Kupplung (27), einem den Motor umschließenden Gehäuse (2), das auf der dem anzutreibenden Aggregat (29; 42) zugewandten Seite eine dünnwandige geschlossene Membran (9) aufweist, durch die die magnetische Kupplungskraft hindurchwirkt, sowie einer im Bereich der Membran (9) vorgesehenen Befestigungseinrichtung zur Verbindung des Motorgehäuses (2) mit dem Gehäuse (31; 43) des anzutreibenden Aggregats (29; 42), wobei der Motor einschließlich Blechpaket (11), Spule (12) und Rotor an zwei parallel zur Rotorachse liegenden äußeren Stiften (14) sitzt, die auf der Seite der Membran (9) in zylindrische Ausnehmungen im Motorgehäuse (2) gesteckt sind, dadurch gekennzeichnet, daß die Stifte (14) auf der der Membran (9) gegenüberliegenden Seite mit elastischen Endkappen (23) versehen sind, die sich an der Innenfläche des aufgesetzten Gehäusedeckels (3) abstützen, daß die Stifte (14) aus zwei zusammenschraubbaren Abschnitten (15, 16) bestehen, wobei der eine Abschnitt (15) einen mittigen Gewindezapfen (17) und der andere Abschnitt (16) eine mittige Gewindebohrung (18) aufweist, daß der Gewindezapfen (17) durch das Blechpaket (11) und durch zwei an beiden Enden des Blechpaketes angeordnete gekröpfte Lagerbügel (19) hindurchgreift, die die Rotorteile (12, 13) lagern, daß allein die zusammengeschraubten Stiftabschnitte (15, 16) das Blechpaket (11) und die Lagerbügel (19) mit ihren einander gegenüberliegenden Stirnflächen (20, 21) zusammendrücken und haltern, daß als Befestigungseinrichtung zwischen dem Motorgehäuse (2) und dem Gehäuse (31; 43) des anzutreibenden Aggregats (29; 42) eine Bajonettverbindung vorgesehen ist und daß am Motorgehäuse (2) der Bajonettinnenteil (33) einstückig mit diesem rund um die dünnwandige Membran (9) ausgebildet ist.

2. Antriebsmotor nach Anspruch 1, dadurch gekennzeichnet, daß das Motorgehäuse (2) becherförmig ausgebildet ist und auf der der Membran (9) gegenüberliegenden Seite mit einem Deckel (3) mit umlaufendem Dichtungsring (5) verschlossen ist.

3. Antriebsmotor nach Anspruch 1 oder 2, dadurch gekennzeichnet, daß das Motorgehäuse (2) ein Kunststoffspritzteil ist.

4. Antriebsmotor nach den Ansprüchen 2 und 3, dadurch gekennzeichnet, daß die elektrische Zuleitung ein mit einem Isoliermantel umgebenes Kabel (24) ist, das durch die Deckelwand hindurchlaufend dicht in diese eingegossen ist.

5. Antriebsmotor nach einem der Ansprüche 1 bis 4, dadurch gekennzeichnet, daß das Motorgehäuse (2) eine Dauer-Ölfüllung aufweist.

6. Antriebsmotor nach Anspruch 5, dadurch gekennzeichnet, daß an mindestens einer Stirnfläche des Innenrandes des Motorgehäuses (2) ein sich rundum erstreckender, axial vorspringender Flansch (54) mit Ausnehmungen (55) angeordnet ist und daß zwischen dem Flansch (54) und der Innenwand des Motorgehäuses (2) radiale Stege (56) mit schrägen Auflaufflächen (57) vorgesehen sind.

7. Antriebsmotor nach einem der Ansprüche 1 bis 6, dadurch gekennzeichnet, daß das Motorgehäuse rund um seinen Umfang mit einstückig angeformten, in Axialrichtung verlaufenden, radial gerichteten Kühlrippen (25) versehen ist.

8. Antriebsmotor nach Anspruch 7, dadurch gekennzeichnet, daß als Motorhalterung eine Konsole (47) mit einer zweiarmigen Spannzange (48) vorgesehen ist, deren Arme (49, 50) zwischen die Kühlrippen (25) des Motorgehäuses (2) eingreifen.

## Claims

1. An electrical drive motor in the field of aquaria, in particular for driving water pumps, including a permanent-magnetic coupling (27) located on the motor shaft (13) as well as a housing (2) surrounding the motor, said housing having a thin-walled sealed diaphragm (9) located at the side directed toward the aggregate (29; 42) to be driven, a diaphragm through which acts the magnetic coupling force, as well as securing means provided in the region of the diaphragm (9) for connecting the motor housing (2) with the housing (31; 43) of the aggregate (29; 42) to be driven, said motor inclusive laminate pack (11), coil (12) and rotor being located at two outer pins (14) disposed parallel to the rotor axis, said pins being inserted at the side of the diaphragm (9) in cylindrical recesses in the motor housing (2), characterized in that said pins (14) located at the side opposite to said diaphragm (9) are provided with resilient end caps (23) resting at the inner surface of the applied housing closure (3), that said pins (14) consist of two interscrewable sections (15, 16), the one section (15) having a central screw spigot (17) and the other section having a central tapped bore (18), that said screw spigot (17) extends through the laminate pack (11) and through two offset brackets (19) arranged at both ends of said laminate pack, said brackets supporting the rotating motor components (12, 13), that alone the interscrewed pin sections (15, 16) compress and retain the laminate pack (11) and the brackets (19) with their faces (20, 21) opposing one another, that as securing means there is provided a bayonet connection between the motor housing (2) and the housing (31; 43) of the aggregate (29; 42) to be driven and that at the motor housing (2) the bayonet male part (33) is integrally formed therewith around the thin-walled diaphragm (9).

2. A drive motor according to claim 1, characterized in that said motor housing (2) is formed cup-shaped and is closed at the side opposite to the diaphragm (9) by a closure (3) having a circumferential sealing ring (5).

3. A drive motor according to claim 1 or 2, characterized in that said motor housing (2) is a plastic injectionmolded part.

4. A drive motor according to claims 2 and 3, characterized in that the electrical leads are a cable (24) encompassed by an insulating shell which passes through the closure wall and is sealingly molded thereinto.

5. A drive motor according to one of claims 1 to 4, characterized in that said motor housing (2) has a permanent oil filling.

6. A drive motor according to claim 5, characterized in that at least at one face of the inner edge of said motor housing (2) there is arranged a circumferentially extending, axially projecting flange (54) having recesses (55) and that between said flange (54) and the inner wall of said motor housing (2) radial webs (56) having inclined cam surfaces (57) are provided.

7. A drive motor according to one of claims 1 to 6, characterized in that said motor housing is provided around its circumference with integrally formed, radially directed cooling ribs (25) extending in axial direction.

8. A drive motor according to claim 7, characterized in that a bracket (47) is provided as motor retaining means having a two-armed clamp (48) the arms (49, 50) of which engage between said cooling ribs (25) of said motor housing (2).

**Revendications**

1. Moteur électrique de commande pour l'équipement d'aquariums, en particulier pour l'entraînement de pompes à eau, avec un accouplement à aimant permanent (27) monté sur l'arbre moteur (13), un carter (2) qui entoure le moteur et qui comporte, du côté dirigé vers l'appareil à entraîner (29; 42), une membrane hermétique à paroi mince (9) à travers laquelle agit la force magnétique d'accouplement, ainsi qu'avec un de fixation, prévu dans la région de la membrane (9), pour raccorder le carter de moteur (2) au carter (31; 43) de l'appareil à entraîner (29; 42), le moteur avec son empilage de tôles (11), sa bobine (12) et son rotor étant monté sur deux tiges extérieures (14) qui s'étendent parallèlement à l'axe du rotor et qui sont enfoncées, du côté de la membrane (9), dans des cavités cylindriques pratiquées dans le carter de moteur (2), caractérisé en ce que, du côté opposé à la membrane (9), les tiges (14) sont munies de capuchons d'extrémité élastiques (23) qui prennent appui sur la surface intérieure du couvercle (3) du carter mis en place, en ce que les tiges (14) sont faites de deux parties (15, 16) assemblables par vis, l'une de ces parties (15) comportant un tenon central fileté (17) et l'autre partie (16) une forure centrale taraudée (18), en ce que le tenon fileté (17) traverse l'empilage de tôles (11) et deux étriers de montage contrecoudés (19) qui sont disposés aux deux extrémités de l'empilage de tôle et qui servent au montage de la partie rotorique (12, 13), en ce que l'empilage de tôles (11) et les étriers de montage (19) sont pressés et maintenus les uns contre les autres, par leurs surfaces frontales (20, 21) mutuellement opposées, uniquement par les parties des tiges (15, 16) assemblées par vis, en ce qu'il est prévu un joint à baionnette comme dispositif de fixation entre le carter de moteur (2) et le carter (31; 43) de l'appareil à entraîner (29; 42) et en ce que sur le carter de moteur (2), la partie interne (33) du joint à baionnette est formée d'une seule pièce avec ce carter, tout autour de la membrane à paroi mince (9).

2. Moteur de commande selon la revendication 1, caractérisé en ce que le carter de moteur (2) est réalisé en forme de godet et est fermé, du côté opposé à la membrane (9), par un couvercle (3) muni tout autour d'une bague d'étanchéité (5).

3. Moteur de commande selon la revendication 1 ou 2, caractérisé en ce que le carter de moteur (2) est une pièce moulée par injection en matière plastique.

4. Moteur de commande selon la revendication 2 ou 3, caractérisé en ce que le conducteur électrique d'aminée est un câble (24) engainé de matière isolante qui est incorporé au moulage dans la paroi du couvercle, de manière à traverser celle-ci de manière étanche.

5. Moteur de commande selon l'une quelconque des revendications 1 à 4, caractérisé en ce que le carter de moteur (2) est garni d'un bain permanent d'huile.

6. Moteur de commande selon la revendication 5, caractérisé en ce qu'il est formé, sur l'une au moins des surfaces frontales de la cavité intérieure du carter de moteur (2), un rebord (54) muni d'échancrures (55) qui fait saillie en direction axiale et s'étend tout autour, et en ce qu'il est prévu, entre ce rebord (54) et la paroi intérieure du carter de moteur (2), des nervures radiales (56) à surfaces d'entrée obliques (57).

7. Moteur de commande selon l'une quelconque des revendications 1 à 6, caractérisé en ce que le carter de moteur est muni, tout autour de sa circonférence, d'ailettes de refroidissement (25) dirigées radialement, s'étendant en direction axiale, formées d'une seule pièce.

8. Moteur de commande selon la revendication 7, caractérisé en ce qu'il est prévu, comme monture pour le moteur, une console (47) comportant une pince de serrage à deux branches (48), dont les branches (49, 50) s'engagent entre des ailettes de refroidissement (25) du carter de moteur (2).

0 009 681

Fig. 1

# Fig.2

# Fig. 3